# EUROPEAN PATENT APPLICATION

(11) **EP 4 266 669 A1**
(43) Date of publication of application: **25.10.2023**
(21) Application number: 21910357.9
(22) Date of filing: 09.12.2021
(51) Int. Cl.: H04N 5/232, G06T 1/00, H04N 7/18

(54) **IMAGING DEVICE AND IMAGE PROCESSING DEVICE**

(30) Priority: 21.12.2020 JP 2020211821
(71) Applicant: Kyocera Corporation, Kyoto-shi Kyoto 612-8501 (JP)
(72) Inventor: Yamazaki Atsushi, Kyoto-shi, Kyoto 612-8501 (JP)
(74) Representative: Viering, Jentschura & Partner mbB Patent- und Rechtsanwälte
(86) International application number: PCT/JP2021/045365
(87) International publication number: WO 2022/138208

(57) **Abstract**

An imaging apparatus includes a first imager, a second imager, a third imager, and an image processor. The first imager acquires a first image captured in a first direction from a first position. The second and third imagers perform capturing in a second direction and a third direction from a second position and a third position to acquire a second image and a third image, respectively. The second position and the third position are positioned opposite the first direction with respect to the first position. The second imager and the third imager each partially share a visual field with the first imager. The image processor combines part of the second image and part of the third image with part of the first image to generate a combined image. The second imager and the third imager have a focal length longer than that of the first imager and has a viewing angle wider than that of the first imager.

## Description

### CROSS-REFERENCE TO RELATED APPLICATIONS

The present application claims priority from Japanese Patent Application No. 2020-211821 filed on December 21, 2020, the entire contents of which are hereby incorporated by reference.

### TECHNICAL FIELD

The disclosure relates to an imaging apparatus and an image processing apparatus.

### BACKGROUND OF INVENTION

An apparatus has hitherto been disclosed, which combines images behind a vehicle to generate one image having a wide visual field (for example, refer to Patent Literature 1). The images are captured by three cameras provided at the center of the back side of the vehicle and the left and right sides of the vehicle.

### CITATION LIST

### PATENT LITERATURE

Patent Literature 1: Japanese Unexamined Patent Application Publication No. 2003-255925

### SUMMARY

An imaging apparatus of the disclosure includes a first imager, a second imager, a third imager, and an image processor. The first imager acquires a first image captured in a first direction from a first position. The second imager performs capturing in a second direction from a second position to acquire a second image. The second position is positioned opposite the first direction with respect to the first position. The second imager partially shares a visual field with the first imager. The third imager performs capturing in a third direction from a third position to acquire a third image. The third position is positioned opposite the first direction with respect to the first position. The third imager partially shares the visual field with the first imager. The image processor combines part of the second image and part of the third image with part of the first image to generate a combined image. The second imager and the third imager have a focal length longer than that of the first imager and has a viewing angle wider than that of the first imager.

An image processing apparatus of the disclosure includes an image acquirer and an image processor. The image acquirer acquires a first image captured in a first direction from a first position by a first imager, acquires a second image captured in a second direction from a second position by a second imager that partially shares a visual field with the first imager, and acquires a third image captured in a third direction from a third position by a third imager that partially shares the visual field with the first imager. The second position is positioned opposite the first direction with respect to the first position. The third position is positioned opposite the first direction with respect to the first position. The image processor combines part of the second image and part of the third image with part of the first image to generate a combined image. The second imager and the third imager have a focal length longer than that of the first imager and has a viewing angle wider than that of the first imager.

### BRIEF DESCRIPTION OF THE DRAWINGS

FIG. 1 is a block diagram schematically illustrating the configuration of an imaging apparatus according to an embodiment of the disclosure.
FIG. 2 is a diagram illustrating an example of arrangement of each imager in the imaging apparatus in FIG. 1 and an imaging range.
FIG. 3 includes diagrams for describing cut-out portions of the respective camera images: FIG. 3A is a diagram for describing the cut-out portion of a left camera image, FIG. 3B is a diagram for describing the cut-out portion of a center camera image, and FIG. 3C is a diagram for describing the cut-out portion of a right camera image.
FIG. 4 is a diagram for describing a combined image and a magnification characteristic of the combined image.
FIG. 5 is a flowchart for describing an image combining method by an image processor.

### DESCRIPTION OF EMBODIMENTS

In capturing of images behind a vehicle using cameras provided at the left and right sides and a camera provided at the center of the back side of the vehicle, the mounting positions of the cameras with respect to the traveling direction of the vehicle are varied and, thus, the distances from the cameras to a target object the image of which is to be captured are varied. Accordingly, when the cameras of the same specifications are used, the size of a subject is varied on the captured images. For example, the target object on the images captured with the cameras provided at the left and right sides, which are further from the target object, is smaller than that on the image captured with the camera at the center of the back side, which is closer to the target object. Accordingly, combining the images captured with the cameras at the left and right sides with the image captured with the camera at the center may cause a feeling of strangeness. Enlargement of the images captured with the cameras at the left and right sides through image processing so as to coincide with the image captured with the camera at the center in order to reduce the feeling of strangeness may degrade the image quality of the images captured with the cameras at the left and right sides.

An imaging apparatus according to an embodiment of the disclosure is capable of generating an image that has a reduced feeling of strangeness for persons and that has a wide visual field by combining images captured by multiple cameras having different distances to a target object.

Embodiments of the disclosure will herein be described with reference to the drawings. The drawings used in the following description are schematically illustrated. The sizes, the ratios, and so on on the drawings do not necessarily coincide with the actual ones.

### (Configuration of imaging apparatus)

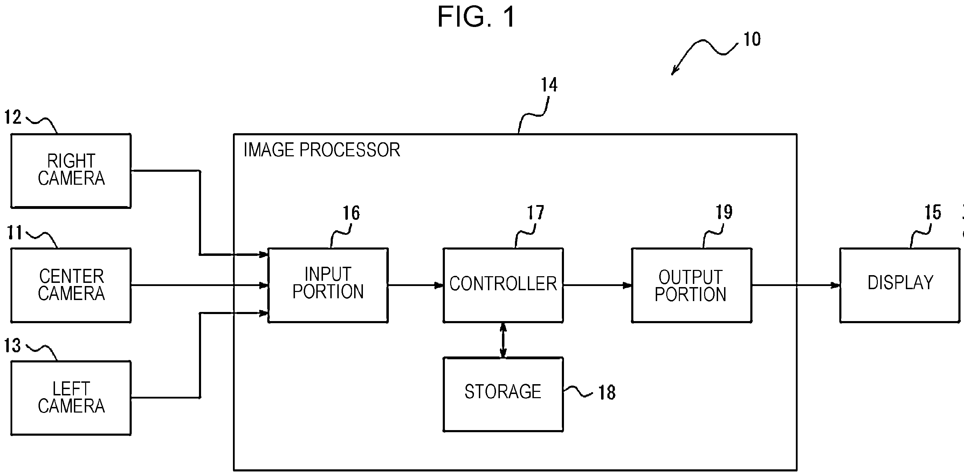

An imaging apparatus 10 according to an embodiment of the disclosure includes a center camera 11, a right camera 12, a left camera 13, and an image processor 14, as illustrated in FIG. 1. The image processor 14 outputs an image resulting from combination of images output from the three cameras: the center camera 11, the right camera 12, and the left camera 13 to the outside including, for example, a display 15.

### (Cameras)

The center camera 11 is a first imager. One of the right camera 12 and the left camera 13 is a second imager and the remaining one of the right camera 12 and the left camera 13 is a third imager. The center camera 11, the right camera 12, and the left camera 13 each include at least one lens and an imaging device. The imaging device is, for example, a charge coupled device image sensor (CCD image sensor) or a complementary metal oxide semiconductor (MOS) image sensor (CMOS image sensor). The center camera 11, the right camera 12, and the left camera 13 each convert an image formed on a light-receiving surface of the imaging device by the lens into an electrical signal. The center camera 11, the right camera 12, and the left camera 13 may each perform arbitrary image processing, such as brightness adjustment, contrast adjustment, and/or gamma correction, to the image converted into the electrical signal.

The center camera 11, the right camera 12, and the left camera 13 are positioned at a first position, a second position, and a third position, which are different from each other, respectively. The imaging direction of the center camera 11 is referred to as a first direction. The first direction is a direction to which the optical axis of the center camera 11 is directed. The second position where the right camera 12 is positioned is apart from the optical axis of the center camera 11 and is at the opposite side in the first direction with respect to the first position. In other words, the right camera 12 is positioned at the back side of the center camera 11, that is, at the opposite side of the subject with respect to the center camera 11. The imaging direction of the right camera 12 is referred as a second direction. The second direction may be the same as the first direction or may be different from the first direction. The third position where the left camera 13 is positioned is apart from the optical axis of the center camera 11 and is at the opposite side in the first direction with respect to the first position. In other words, the left camera 13 is positioned at the back side of the center camera 11. The imaging direction of the right camera 12 is referred to as a third direction. The third direction may be the same as the first direction or may be different from the first direction. The right camera 12 may be positioned at the right side of the optical axis of the center camera 11 when viewed from the center camera 11 toward the imaging direction of the center camera 11. The left camera 13 may be positioned at the left side of the optical axis of the center camera 11 when viewed from the center camera 11 toward the imaging direction of the center camera 11. The right camera 12 and the left camera 13 are positioned at different sides with the center camera 11 sandwiched therebetween when viewed from the first direction. With the above configuration, the imaging apparatus 10 is capable of covering a laterally wide range as an imaging target area.

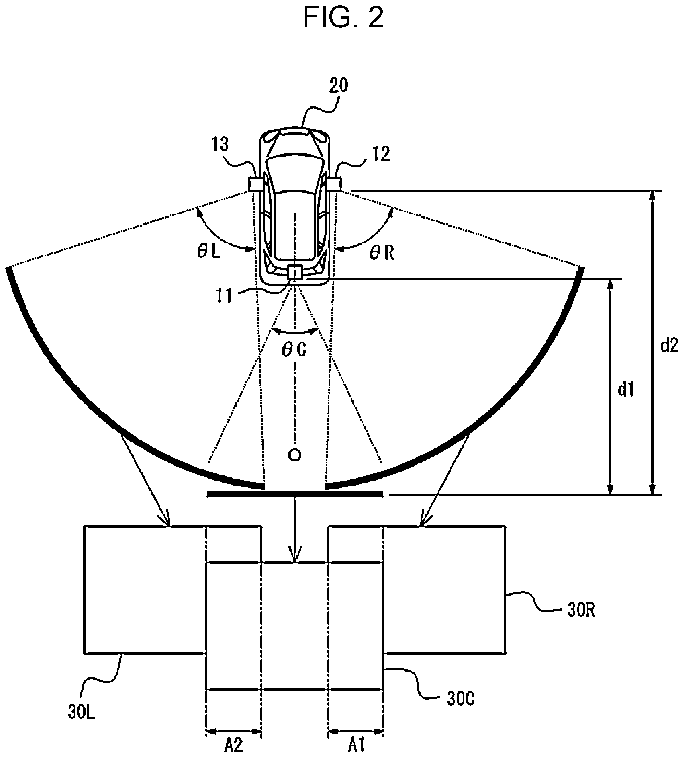

In an embodiment, the imaging apparatus 10 is mounted in a vehicle 20, as illustrated in FIG. 2. Although the "vehicle" is, for example, an automobile, a track vehicle, an industrial vehicle, or a life vehicle, the vehicle is not limited to these vehicles. The automobile is, for example, a car, a bus, or a truck. The imaging apparatus 10 may be mounted in a movable body other than the "vehicle". The movable body may be, for example, an aircraft, a boat or a ship, or a robot. In one example, the vehicle 20 in FIG. 2 is described as an automobile.

The center camera 11 is a rear camera fixed at the center of the back side of the vehicle 20 in a state in which an optical axis O is directed to the back side of the vehicle 20. The center camera 11 is designed so as to focus on a subject apart from the vehicle 20 by a subject distance d1. The right camera 12 is a right-side camera that is arranged at the right side of the vehicle 20 and that is capable of capturing images on the right side and the back side of the vehicle 20. The right camera 12 may be arranged at, for example, the position of a right-side door mirror. The left camera 13 is a left-side camera that is arranged at the left side of the vehicle 20 and that is capable of capturing images on the left side and the back side of the vehicle 20. The left camera 13 may be arranged at, for example, the position of a left-side door mirror. The right camera 12 and the left camera 13 are designed so as to focus on the subject apart from the right camera 12 and the left camera 13 by a subject distance d2 (d2 > d1). In one example, d1 and d2 may be set to 10 m and 12.5 m, respectively. In this case, the distance from the right camera 12 and the left camera 13 to the subject is longer than the distance from the center camera 11 to the subject by about 2.5 m.

In the vehicle 20, the right camera 12 and the left camera 13 are used to monitor the periphery of the vehicle 20. In order to reduce the blind spot of the imaging apparatus 10, the right camera 12 and the left camera 13 preferably have wide viewing angles θR and θL, respectively. For example, the right camera 12 and the left camera 13 have a viewing angle of about 90 degrees. The viewing angle θR of the right camera 12 and the viewing angle θL of the left camera 13 are wider than a viewing angle θC of the center camera 11, which is about 50 degrees. Videos shot by the center camera 11, the right camera 12, and the left camera 13 are combined in a manner described below. Accordingly, the same subject is desirably captured by the respective cameras so as to have the same size or similar sizes. However, the camera having a wide viewing angle generally has a short focal length. Accordingly, there is a problem in that it is difficult to make the magnifications of the right camera 12 and the left camera 13 equal to the magnification of the center camera 11, which are mounted at the back side of the vehicle 20, compared with the right camera 12 and the left camera 13.

Accordingly, cameras using fovea lenses are adopted as the right camera 12 and the left camera 13 in the imaging apparatus 10 of the disclosure. The camera using the fovea lens has a higher resolution in a central portion of the visual field than in peripheral areas of the visual field. Here, the resolution is the number of pixels included in, for example, one angle of view. In the image captured with the fovea lens, the image in a central area is enlarged, compared with the image in the peripheral areas. In one example, the maximum value of the resolution in the central area having the maximum enlargement ratio of the image is more than 2.5 times, for example, about three times higher than the minimum value of the resolution in the peripheral areas having the maximum reduction ratio of the image. The central area is, for example, an area of a predetermined range around the optical axis. The use of the fovea lenses enables the right camera 12 and the left camera 13 to have a focal length longer than the focal length of the center camera 11 while having the viewing angles θR and θL, which are wider than the viewing angle θC of the center camera 11. Accordingly, it is possible to make the size of the subject in the central portions of a right camera image 30R and a left camera image 30L close to the size of the subject in a center camera image 30C. The portion having the maximum enlargement ratio of the image may not necessarily be the center of the image in the fovea lens. For example, a peak position of the enlargement ratio on the right camera image 30R may be shifted leftward, that is, toward the optical axis side of the center camera 11. Similarly, a peak position of the enlargement ratio on the left camera image 30L may be shifted rightward, that is, toward the optical axis side of the center camera 11.

The center camera image 30C, the right camera image 30R, and the left camera image 30L, which are captured by the center camera 11, the right camera 12, and the left camera 13, respectively, are illustrated in lower portions in FIG. 2. The center camera image 30C is a first image. One of the right camera image 30R and the left camera image 30L is a second image and the remaining one of the right camera image 30R and the left camera image 30L is a third image. The center camera 11 and the right camera 12 partially share the visual field. The center camera 11 and the left camera 13 partially share the visual field. Accordingly, the subject included in the center camera image 30C is partially overlapped with the subject included in the right camera image 30R. The subject included in the center camera image 30C is partially overlapped with the subject included in the left camera image 30L. An overlapping area A1 in which the subject in the center camera image 30C is overlapped with the subject in the right camera image 30R and an overlapping area A2 in which the subject in the center camera image 30C is overlapped with the subject in the left camera image 30L are illustrated in FIG. 2. The overlapping area A1 may include a portion where the magnification of the right camera image 30R is peaked. The overlapping area A2 may include a portion where the magnification of the left camera image 30L is peaked.

### (Image processor)

The image processor 14 in FIG. 1 may be referred to as an image processing apparatus. The image processor 14 includes an input portion 16, a controller 17, a storage 18, and an output portion 19.

The input portion 16 acquires the center camera image 30C, the right camera image 30R, and the left camera image 30L from the center camera 11, the right camera 12, and the left camera 13, respectively. The input portion 16 is an image acquirer. The input portion 16 is an input interface that accepts an input of image data into the image processor 14. The input portion 16 may include a physical connector and a radio communication device. The image data about the image captured by each of the center camera 11, the right camera 12, and the left camera 13 is input into the input portion 16. The input portion 16 passes the input image data to the controller 17.

The controller 17 controls the entire image processor 14 and performs the image processing to the center camera image 30C, the right camera image 30R, and the left camera image 30L, which are acquired by the input portion 16. The controller 17 includes one or more processors. The processors include a general-purpose processor that reads a specific program to perform a specific function and a dedicated processor specialized for a specific process. The dedicated processor is, for example, an application specific integrated circuit (ASIC). The processors include a programmable logic device (PLD). The PLD is, for example, a field programmable gate array (FPGA). The controller 17 may be either of System-on-a-Chip (SoC) in which one or more processors cooperate and System in a Package (SiP).

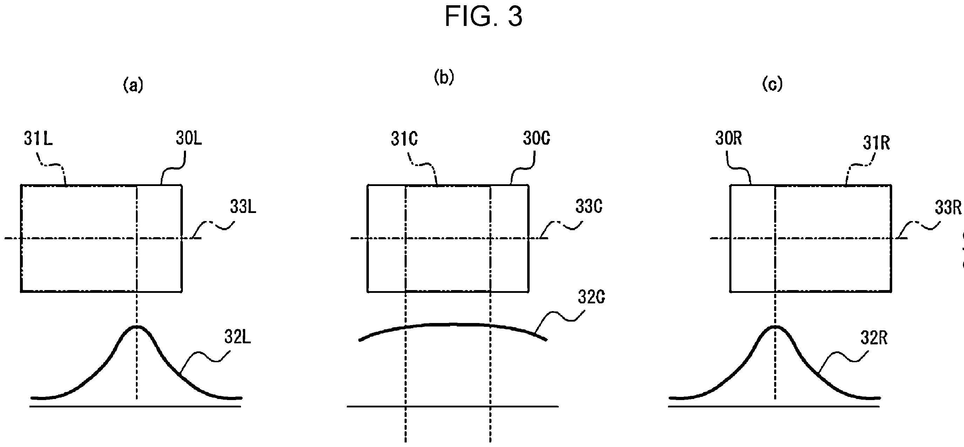

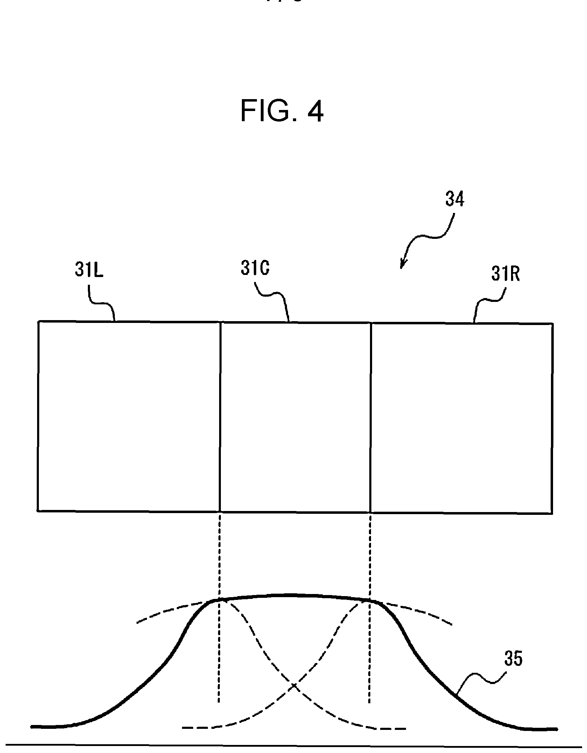

The controller 17 is capable of executing an image processing program stored in the storage 18. The storage 18 includes one or more of, for example, a semiconductor memory, a magnetic memory, and an optical memory. The image processing performed by the controller 17 includes a process to combine the center camera image 30C, the right camera image 30R, and the left camera image 30L, which are acquired by the input portion 16. The controller 17 is capable of generating a combined image in which part of the right camera image 30R and part of the left camera image 30L are combined with part of the center camera image 30C. The combined image is one image indicating a wide-range landscape behind the vehicle 20. How the images are combined by the controller 17 is illustrated in FIG. 3 and FIG. 4.

FIG. 3A illustrates the left camera image 30L and a magnification curve 32L indicating the image magnification factor at each position in the lateral direction of the left camera image 30L. The magnification curve 32L indicates how the image magnification factor is varied along a virtual line 33L extending in the lateral direction of the left camera image 30L. The magnification curve 32L corresponds to a magnification characteristic of the lens of the left camera 13. The lens of the left camera 13 is the fovea lens. Accordingly, the magnification in the central area is higher than that in the peripheral areas in the left camera image 30L. In other words, the resolution in the central area is higher than that in the peripheral areas. A position where the image magnification factor is peaked is referred to as a magnification peak position. The image magnification factor of the left camera image 30L is decreased with the increasing distance from the magnification peak position. The image magnification factor of the left camera image 30L may have the same value as that of the image magnification factor of the center camera image 30C or a value closer to that of the image magnification factor of the center camera image 30C at the magnification peak position.

The controller 17 cuts out an area on the opposite side of the center camera image 30C as a left partial image 31L with respect to the magnification peak position of the left camera image 30L or a position shifted from the magnification peak position toward the opposite side of the center camera image 30C. In other words, the controller 17 cuts out a left-side area of the left camera image 30L as the left partial image 31L with respect to the magnification peak position or a position shifted leftward from the magnification peak position. When the left partial image 31L is cut out at a position shifted rightward with respect to the magnification peak position, portions having lower magnifications exist on the left and right sides of the magnification peak position in the left partial image 31L. Accordingly, it may be hard to see the combined image. In such an image, for example, the continuity of the variation in the size of the subject in the combined image may be lost to make the combined position visible. When the left partial image 31L is cut out at a position shifted rightward with respect to the magnification peak position, an enlargement process of the image may be required in part of the left partial image 31L in combination with a center partial image 31C described below.

Although the magnification peak position may be set to a geometric center of the left camera image 30L, the magnification peak position may be shifted from the geometric center. In the example in Fig. 3A, the magnification peak position of the left camera image 30L is shifted toward the side of the area where the center camera image 30C is captured. This facilitates the combination of the left camera image 30L with the center camera image 30C and achieves the wide combined image.

FIG. 3B illustrates the center camera image 30C and a magnification curve 32C indicating the image magnification factor at each position in the lateral direction of the center camera image 30C. The magnification curve 32C indicates how the image magnification factor is varied along a virtual line 33C extending in the lateral direction of the center camera image 30C. A normal lens having a substantially fixed magnification characteristic in every direction is used for the center camera 11. Accordingly, the magnification curve 32C has an almost planar shape. The controller 17 cuts out a portion resulting from exclusion of a portion where the subject on the left partial image 31L cut out from the left camera image 30L is overlapped with the subject on the center camera image 30C and a portion where the subject on a right partial image 31R (refer to FIG. 3C) cut out from the right camera image 30R is overlapped with the subject on the center camera image 30C from the center camera image 30C as the center partial image 31C.

FIG. 3C illustrates the right camera image 30R and a magnification curve 32R indicating the image magnification factor at each position in the lateral direction of the right camera image 30R. Since FIG. 3C is axisymmetric with FIG. 3A and is the same as FIG. 3A excluding the difference in the left and the right, a description of FIG. 3C is omitted herein. The controller 17 cuts out the right partial image 31R from the right camera image 30R.

The size of the image of the subject, which is captured by the center camera 11, preferably coincides with the sizes at the magnification peak positions of the images of the subject, which are captured by the right camera 12 and the left camera 13, at the boundaries where the images are cut out. That is, the subject preferably has the same size at the position where the left partial image 31L is combined with the center partial image 31C. Similarly, the subject preferably has the same size at the position where the right partial image 31R is combined with the center partial image 31C. However, the controller 17 is capable of correcting the sizes of the images of the subject so as to coincide with each other or so as to make closer to each other through an enlargement or reduction process of the images even if the sizes of the subject do not coincide with each other on the images. Since the right camera 12 and the left camera 13 use the fovea lenses, the size of the subject at the position where the center partial image 31C is combined with the right partial image 31R is capable of being substantially made closer to the size of the subject at the position where the center partial image 31C is combined with the left partial image 31L. Accordingly, it is possible to reduce the influence of degradation of the images through the reduction or enlargement process of the images. The boundary between the center camera image 30C and the right camera image 30R and the boundary between the center camera image 30C and the left camera image 30L (that is, the cut-out lines of the center camera image 30, the right camera image 30R, and the left camera image 30L) are not limited to straight lines and the cutting-out from the center camera image 30C, the right camera image 30R, and the left camera image 30L may be along curved lines.

The controller 17 combines the center partial image 31C, the right partial image 31R, and the left partial image 31L, which are cut out from the center camera image 30C, the right camera image 30R, and the left camera image 30L, respectively, to generate a combined image 34 in a manner illustrated in FIG. 4. A combined magnification curve 35 indicating the image magnification factor of the combined image 34 has a higher image magnification factor in a wide central portion and has decreased image magnification factors toward peripheral portions. Accordingly, the combined image 34 has a wider visual field having a wide precise area in the central portion.

The controller 17 is capable of outputting the combined image 34 to another device, such as the display 15, via the output portion 19. The output portion 19 is an output interface that outputs the image data about the combined image 34 to the outside. The output portion 19 may include a physical connector and a radio communication device. In one embodiment, the output portion 19 may be connected to a network of the vehicle 20, such as a control area network (CAN).

An arbitrary display device may be adopted as the display 15, which displays the combined image 34. For example, various flat panel displays, such as a liquid crystal display (LCD), an organic electro-luminescence (EL) display, an inorganic EL display, a plasma display panel (PDP), and a field emission display (FED), may be used as the display 15. The display of another apparatus, such as a navigation apparatus, may be shared as the display 15. The display 15 may be used as a digital mirror that mirrors the back side of the vehicle 20.

### (Processing flow)

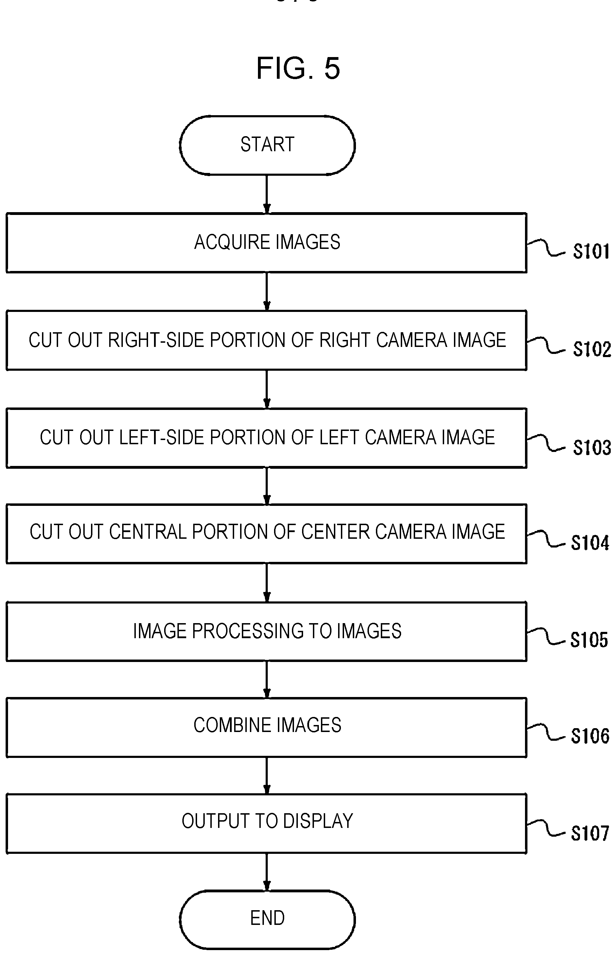

An image processing method performed by the controller 17 will now be described with reference to FIG. 5. The controller 17 performs the process of a flowchart illustrated in FIG. 5 in accordance with the image processing program stored in the storage 18. The image processing program may be installed by reading a program recorded on a non-temporary computer readable medium. Although the non-temporary computer readable medium is, for example, a magnetic storage medium, an optical storage medium, a magneto-optical storage medium, or a semiconductor storage medium, the non-temporary computer readable medium is not limited to these storage media.

First, the controller 17 acquires the center camera image 30C, the right camera image 30R, and the left camera image 30L from the center camera 11, the right camera 12, and the left camera 13, respectively (Step S101).

After Step S101, the controller 17 cuts out the right partial image 31R from the right side of the magnification peak position of the right camera image 30R (Step S102).

The controller 17 cuts out the left partial image 31L from the left side of the magnification peak position of the left camera image 30L (Step S103).

The controller 17 cuts out the central portion of the center camera image 30C, which results from exclusion of the portion where the subject in the center camera image 30C is overlapped with the subject in the right partial image 31R and the portion where the subject in the center camera image 30C is overlapped with the subject in the left partial image 31L, as the center partial image 31C (Step S104).

The order in which Steps S102, S103, and S104 are performed is not limited to the order illustrated in FIG. 5. Steps S102, S103, and S104 may be performed in an order different from that in FIG. 5. Steps S102, S103, and S104 may be concurrently performed.

After Steps S102 to S104, the controller 17 performs image processing to the center partial image 31C, the right partial image 31R, and the left partial image 31L (Step S105). The image processing performed in Step S105 includes enlargement or reduction in size of the images. If the sizes of the subject in the combined portions, which are the boundaries where the center partial image 31C, the right partial image 31R, and the left partial image 31L are combined, do not coincide with each other, the controller 17 is capable of coinciding the sizes of the subject with each other or making the sizes of the subject closer to each other by enlarging or reducing either of the right partial image 31R and the left partial image 31L. In addition, the controller 17 may perform a process to correct any distortion of the right partial image 31R and the left partial image 31L, if needed. The controller 17 may perform a process to make the combined portions of the images more natural, in addition to the above correction.

After Step S105, the controller 17 combines the center partial image 31C, the right partial image 31R, and the left partial image 31L to generate the combined image 34 (Step S106).

The controller 17 outputs the combined image 34 generated in Step S105 to the display 15 (Step S107).

As described above, according to the present embodiment, the fovea lenses having a focal length longer than that of the center camera 11 and having a viewing angle wider than that of the center camera 11 are adopted as the right camera 12 and the left camera 13, which are more apart from the subject than the center camera 11. Accordingly, the right camera 12 and the left camera 13 have a viewing angle wider than that of the center camera 11. In addition, the use of the fovea lenses as the right camera 12 and the left camera 13 enables the sizes of the subject in the right partial image 31R and the left partial image 31L and the size of the subject in the center partial image 31C to coincide with each other or make closer to each other in the combined portions. Accordingly, the center partial image 31C, the right partial image 31R, and the left partial image 31L are capable of being combined in an aspect with no feeling of strangeness or in an aspect having the reduced feeling of strangeness. In addition, the highly precise image like the center partial image 31C is achieved near the portion where the right partial image 31R is combined with the center partial image 31C and the portion where the left partial image 31L is combined with the center partial image 31C. Accordingly, the imaging apparatus 10 is capable of generating the image having a wider visual field, which is highly precise in the central portion and which offers the reduced feeling of strangeness to persons. Furthermore, with the imaging apparatus 10, the enlargement ratio of the image is capable of being decreased even when the enlargement of the image or the like is performed to combine the center partial image 31C with the right partial image 31R and the left partial image 31L. Consequently, it is possible to minimize the degradation of the image, which is caused by the enlargement of the image.

The combined image 34 output from the imaging apparatus 10 is capable of being used as an image of the digital mirror of the vehicle 20. The combined image 34 has the enlarged central portion and the reduced left and right peripheral portions. The image observed with the digital mirror has a high degree of importance in the central portion and a relatively low degree of importance in the peripheral portions. Accordingly, the combined image 34 output from the imaging apparatus 10 is preferable to applications to an apparatus supporting safety drive of the vehicle 20, such as the digital mirror.

Although the embodiments according to the disclosure are described above based on the various drawings and the examples, various variations or changes may be made by the person skilled in the art based on the disclosure. Accordingly, it is noted that these variations or changes are included in the range of the disclosure. For example, the center camera 11 may be a combination of multiple cameras, instead of the one camera, and the center camera image 30C may be generated by combining the images captured by the cameras. For example, functions and so on included in the respective components, the respective steps, or the likes may be rearranged without logical inconsistency and the multiple components, the multiple steps, or the likes may be combined into one or may be divided. Although the description focuses on the apparatus in the embodiments according to the disclosure, the embodiments according to the disclosure may be realized as a method including steps performed by the respective components in the apparatus. The embodiments according to the disclosure may be realized as a method performed by a processor in the apparatus, programs executed by the processor in the apparatus, or a storage medium having the programs recorded thereon. The method, the programs, and the storage medium are included in the scope of the disclosure.

### REFERENCE SIGNS

- 10: imaging apparatus
- 11: center camera (first imager)
- 12: right camera (second imager)
- 13: left camera (third imager)
- 14: image processor (image processing apparatus)
- 15: display
- 16: input portion (image acquirer)
- 17: controller
- 18: storage
- 19: output portion
- 20: vehicle
- 30C: center camera image
- 30R: right camera image
- 30L: left camera image
- 31C: center partial image
- 31R: right partial image
- 31L: left partial image
- 32C, 32R, 32L: magnification curve
- 33C, 33R, 33L: virtual line
- 34: combined image
- 35: combined magnification curve
- A1, A2: overlapping area
- d1, d2: subject distance
- θC, θR, θL: viewing angle
- O: optical axis

## Claims

1. An imaging apparatus comprising:
a first imager that acquires a first image captured in a first direction from a first position;
a second imager that performs capturing in a second direction from a second position to acquire a second image and that partially shares a visual field with the first imager, the second position being positioned opposite the first direction with respect to the first position;
a third imager that performs capturing in a third direction from a third position to acquire a third image and that partially shares the visual field with the first imager, the third position being positioned opposite the first direction with respect to the first position; and
an image processor that combines part of the second image and part of the third image with part of the first image to generate a combined image,
wherein the second imager and the third imager have a focal length longer than that of the first imager and has a viewing angle wider than that of the first imager.

2. The imaging apparatus according to claim 1,
wherein the second imager and the third imager each use a fovea lens and have a higher resolution in a central portion of the visual field than in peripheral portions thereof.

3. The imaging apparatus according to claim 1 or 2,
wherein the second image and the third image are each combined with the first image at a position having a highest image magnification factor or at a side of the position having the highest image magnification factor, which is opposite to a side where part of the first image is arranged.

4. The imaging apparatus according to claim 3,
wherein an area having the highest image magnification factor is shifted from a geometric center on each of the second image and the third image.

5. The imaging apparatus according to any of claims 1 to 4,
wherein the image processor enlarges or reduces at least one selected from the group consisting of the first image, the second image, and the third image so that a size of an image of a subject in a portion where the first image is combined with the second image coincides with or is made closer to a size of an image of the subject in a portion where the first image is combined with the third image.

6. The imaging apparatus according to any of claims 1 to 4,
wherein the second imager and the third imager are arranged at different sides with the first imager sandwiched therebetween when viewed from the first direction.

7. An image processing apparatus comprising:
an image acquirer that acquires a first image captured in a first direction from a first position by a first imager, that acquires a second image captured in a second direction from a second position by a second imager that partially shares a visual field with the first imager, the second position being positioned opposite the first direction with respect to the first position, and that acquires a third image captured in a third direction from a third position by a third imager that partially shares the visual field with the first imager, the third position being positioned opposite the first direction with respect to the first position; and
an image processor that combines part of the second image and part of the third image with part of the first image to generate a combined image,
wherein the second imager and the third imager have a focal length longer than that of the first imager and has a viewing angle wider than that of the first imager.
